# EUROPEAN PATENT SPECIFICATION

(11) **EP 2 754 606 B1**
(45) Date of publication and mention of the grant of the patent: **18.05.2016**
(21) Application number: 14150422.5
(22) Date of filing: 08.01.2014
(51) Int. Cl.: B62K 23/06, B62M 25/08, B62L 3/02

(54) **Bicycle control device**
Steuerungseinrichtung für ein Fahrrad
Dispositif de commande d'une bicyclette

(30) Priority: 10.01.2013 TW 102100948
(43) Date of publication of application: 16.07.2014
(73) Proprietor: AD-II Engineering Inc., Taichung City (TW)
(72) Inventor: Mu, Hsueh-Chih, Taichung City (TW)
(74) Representative: Becker Kurig Straus

(56) References cited:
- EP-A1- 1 473 220
- EP-A2- 1 642 823
- EP-A2- 1 808 367

## Description

### BACKGROUND OF THE INVENTION

### 1. Field of the Invention

The present invention relates to a bicycle mechanism and more particularly, to a bicycle control device for conveniently gear shifting of a derailleur, having the advantages of excellent structural stability and high durability.

### 2. Description of the Related Art

With the ever rising of the energy price, bicycle riding has become the most popular pastime, sports and transportation method. For the purpose of riding comfort, the ability of gear changing has become the basic and one of the most desirable functions of a bicycle.

Conventionally, the control of a derailleur of a bicycle is achieved by means of pulling a derailleur cable mechanically. In other words, a control lever is mounted adjacent to the brake lever for manual operation by the bicycle rider. With the help of the fast development of electronic control technology in recent years, some bicycle manufacturers started to install electronic switches in the brake lever for the control of the derailleur of the bicycle. US 6,015,036, entitled "ELECTRICAL SHIFT CONTROL DEVICE FOR A BICYCLE TRANSMISSION", discloses a bicycle control device. This design discloses the arrangement of the electrical shift control switches on the brake lever for finger operation. However, inherent in this design, the wires of the electrical shift control switches must be laid through the pivoting area of the brake lever. Thus, this design is not conducive to the wiring of the electrical shift control switches.

US 6,073,730, entitled "BICYCLE SWITCH AND BRACKET COVER THEREFOR", discloses another bicycle control device. According to this disclosure, the switches are mounted in a switch mounting recess of a brake member bracket which is for use in fastening the handlebar of the brake. Although such design contributes to solve the electrical wiring problem, the structural strength of the brake member bracket is sacrificed due to the switch mounting recess. Besides, such design also leads to poor ergonomics satisfaction.

EP 1 808 367 A2 is considered the closest prior art and discloses a bicycle control device comprising a supporting member, a brake lever movably connected to the supporting member, a pivot axle mounted between the supporting member and the break lever, and an electrical shift control unit. The electrical shift control unit comprises a main body mounted to the pivot axle, and an input module connected to the main body. The input module has at least one protruded part exposed to the outside of the supporting member (1).

US 6,698,567 discloses yet another bicycle control device, entitled "ELECTRIC CONTROL DEVICE FOR A MOTOR-DRIVEN DERAILLEUR FOR BICYCLES", which comprises: a supporting body provided with means for fixing it to a bicycle bracket, a brake control lever hinged to the supporting body, a pair of electric switches to control gear change carried by the supporting body, and a gear change lever that can be operated manually to control at least one of the switches. Even though such bicycle control device satisfies ergonomic criteria and solves the electrical wiring problem, complicate structure and lowered durability just become other problems thereof.

### SUMMARY OF THE INVENTION

The present invention has been accomplished under the circumstances in view. It is the main object of the present invention to provide a bicycle control device, which can be firmly mounted in the bicycle handlebar and is convenient in operation.

It is another object of the present invention to provide a bicycle control device, which has the advantages of simple structure, easy installation and high durability.

To achieve these and other objects of the present invention, a bicycle control device as in claims 1, 2 and 6 is provided, which includes a supporting member, a brake lever movably connected to the supporting member, a pivot axle mounted in the supporting member, and an electrical shift control unit. The electrical shifting control unit includes a main body which is either (i) embedded in, (ii) fixedly mounted inside, or (iii) pivotally connected to the pivot axle, and an input module connected to the main body. The input module has at least one protruded part exposed to the outside of the supporting member. In embodiment (i) of the present invention, the pivot axle is a tubular member and the at least one protruded part of the input module is protrusive from at least one end of the pivot axle. In embodiment (ii) of the present invention the main body further defines at least one through hole for insertion of the pivot axis. In embodiment (iii) of the present invention, the main body is drivable by the brake lever to move relative to the supporting member, and the at least one protruded part of the input module is an operating lever extending from the main body along one side of the brake lever.

Thus, the pivot axle of the bicycle control device enhances the structural strength of the control unit. By arranging the input module on the supporting member or at a suitable place adjacent to the brake lever, the bicycle rider can operate the input module with the hand to control gear shifting of the derailleur of the bicycle.

Other advantages and features of the present invention will be fully understood by reference to the following specification in conjunction with the accompanying drawings, in which like reference signs denote like components of structure.

### BRIEF DESCRIPTION OF THE DRAWINGS

FIG. 1 is a schematic drawing illustrating an electrical shift control unit installed in the bicycle control device in accordance with the first embodiment of the present invention.
FIG. 2 is schematic perspective view of the first embodiment of the present invention, illustrating the electrical shift control unit installed in the pivot axle.
FIG. 3 is a schematic drawing illustrating an electrical shift control unit installed in the bicycle control device in accordance with the second embodiment of the present invention.
FIG. 4 is a schematic exploded view of the second embodiment of the present invention, illustrating the relationship between the electrical shift control unit and the pivot axle.
FIG. 5 is a schematic drawing illustrating an electrical shift control unit installed in the bicycle control device in accordance with the third embodiment of the present invention.
FIG. 6 is a schematic drawing, illustrating the relationship between the electrical shift control unit and the pivot axle in accordance with the third embodiment of the present invention.
FIG. 7 is a schematic drawing illustrating an electrical shift control unit installed in the bicycle control device in accordance with the fourth embodiment of the present invention.
FIG. 8 is a schematic drawing, illustrating the relationship between the electrical shift control unit and the pivot axle in accordance with the fourth embodiment of the present invention.

### DETAILED DESCRIPTION OF THE INVENTION

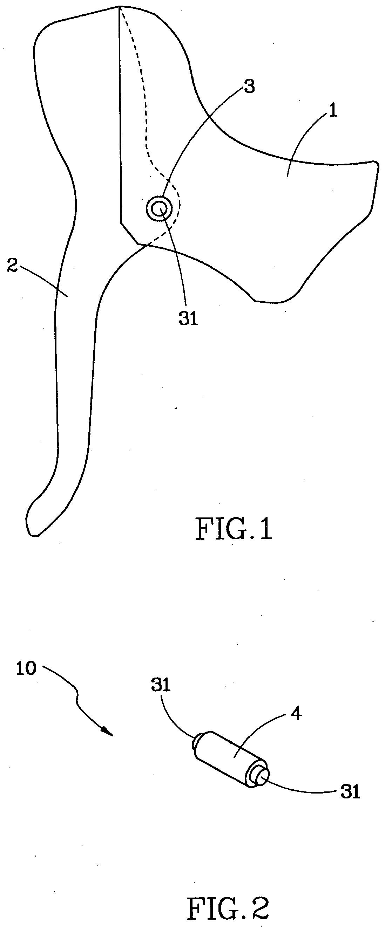

Referring to FIGS. 1 and 2, an electrical shift control unit **10** is installed in a bicycle control device in accordance with a first embodiment of the present invention. The bicycle control device further includes a supporting member **1** defining therein an axial bore **3**, a brake lever **2** pivotally connected to the supporting member **1**, and a pivot axle **4** mounted in the axial bore **3** of the supporting member **1** and works as the rotation axis of the brake lever **2**. In this embodiment, the pivot axle **4** is a tubular member that does not rotate with the brake lever **2**.

The electrical shift control unit **10** includes a main body (not shown) mounted inside the pivot axle **4** for generating and transmitting a gear shifting control signal, and an input module **30** formed of two press-buttons **31**. These two press-buttons **31** are electrically connected to the main body and respectively protrusive from the opposite ends of the pivot axle **4** to extend out of the axial bore **3** to the outside of the supporting member **1**. Thus, the bicycle rider can press the press-buttons **31** with fingers for gear shifting control.

Furthermore, rotary buttons can be used in substitution of the aforesaid press-buttons, enabling bikers to make a gear shifting control by rotating the rotary buttons with the fingers.

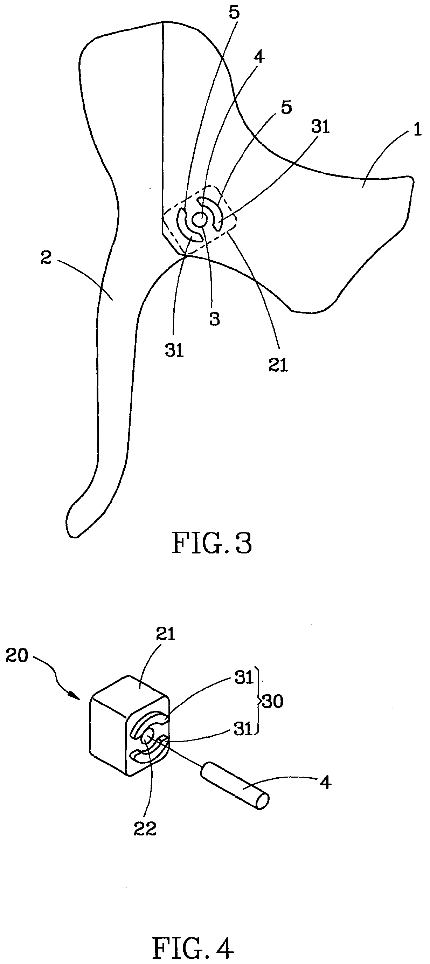

In the aforesaid embodiment of the present invention, the press-buttons **31** are arranged at two opposite sides of the supporting member **1**. To enable the bicycle rider to control the gear shifting with one single finger, the supporting member **1** in accordance with the second embodiment of the present invention, as shown in FIGS. 3 and 4, is configured to provide two button slots **5** spaced around the axial bore **3**, and the pivot axle **4** is made in the form of a solid cylinder fixedly mounted in the axial bore **3**.

In this second embodiment, the main body **20** of the electrical shift control unit **10** includes a housing **21** fixedly mounted inside the supporting member **1** and defining a through hole **22** for the insertion of the pivot axle **4**; the press-buttons **31** of the input module **30** are mounted at one side of the housing **21** and extended out of the button slots **5** respectively to the outside of the supporting member **1**, allowing the bicycle rider to operate the press-buttons **31** with one single finger.

In the aforesaid embodiments, the main body is mounted to the pivot axle inside the supporting member, such that the space occupation is reduced and the structural strength is maintained. Further, the input module is mounted at the supporting member, and therefore the bicycle rider can operate the input module with the fingers grasping the supporting member. As a result, the main body outputs a gear shifting control signal to shift the derailleur.

Although the input module of the aforesaid embodiments is mounted at the supporting member, it is to be noted that the input module can also be disposed adjacent to the brake lever.

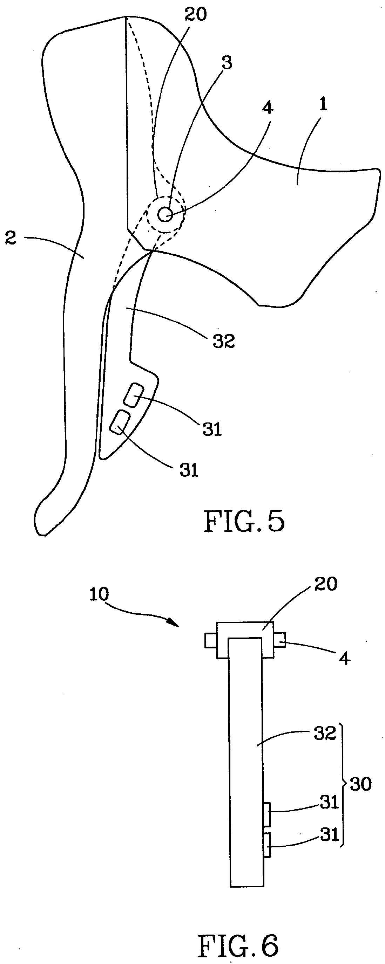

Please refer to FIGS. 5 and 6 for an electrical shift control unit **10** in accordance with a third embodiment of the present invention. The main body **20** is pivotally connected to the pivot axle **4** and drivable by the brake lever **2** to move relative to the supporting member **1**. The input module **30** includes an operating lever **32** extending from the main body 20 along one side of the brake lever **2** and rotatable about the pivot axle **4**. The press-buttons **31** are mounted on a surface of the operating lever **32**.

Based on such design, the operating lever **32** can be moved with the brake lever **2** pressed by the bicycle rider. To shift the derailleur gears, the bicycle rider can operate the buttons, i.e. the electronic switches, at the operating lever **32**. Such arrangement of the buttons renders optimal operating convenience.

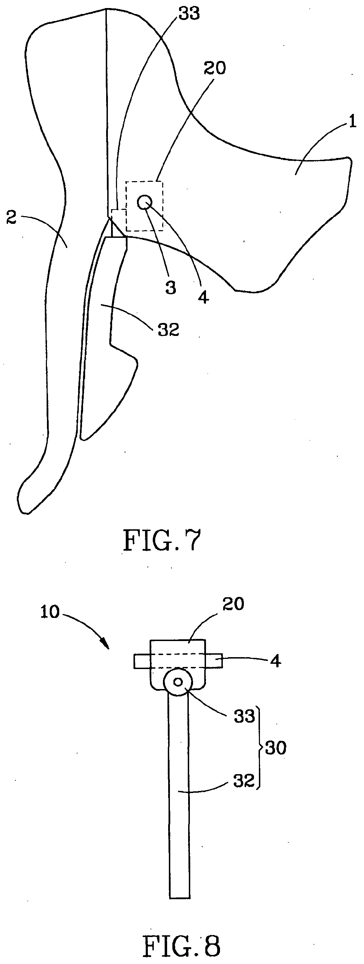

For the purpose of simplification of structure, an electrical shift control unit **10** in accordance with a fourth embodiment of the present invention, as shown in FIGS. 7 and 8, is provided. The fourth embodiment is similar to the third embodiment and yet different in ways that the input module **30** of the fourth embodiment includes a rotary button **33**, rather than press-buttons, rotatably mounted to the main body 20; the operating lever **32** is connected to the rotary button **33** and rotatable relative to the housing **21** of the main body **20**; and the rotating axis of the operating lever **32** is substantially perpendicular to that of the pivot axle **4**. Thus, the bicycle rider can press the operating lever **32** with the fingers, driving the main body **20** to output a gear shifting control signal. Such operation manner is more ergonomic. Further, the structure of the fourth embodiment is rather simple.

In conclusion, the main body of the present invention is directly mounted to a pivot axle. Such design occupies smaller space without sacrificing the structural strength thereof. Further, the present invention also enables a variety of arrangements of the input module and therefore renders better design flexibility for installation in any of a variety of bicycle control devices while conforming with ergonomics at the same time.

## Claims

1. A bicycle control device, comprising:
a supporting member (1);
a brake lever (2) movably connected to the supporting member (1);
a pivot axle (4) mounted in the supporting member (1) and worked as the rotation axis of the brake lever (2); and
an electrical shift control unit (10),
**characterized in that** the electrical shift control unit (10) comprises:
a main body (20) embedded in the pivot axle (4); and
an input module (30) connected to the main body (20), the input module (30) having at least one protruded part (31,32,33) exposed to the outside of the supporting member (1);
wherein the pivot axle (4) is a tubular member, and the at least one protruded part (31) of the input module (30) is protrusive from at least one end of the pivot axle (4).

2. A bicycle control device comprising:
a supporting member (1);
a brake lever (2) movably connected to the supporting member (1);
a pivot axle (4) mounted in the supporting member (1) and worked as the rotation axis of the brake lever (2); and
an electrical shift control unit (10),
**characterized in that** the an electrical shift control unit (10) comprises:
a main body (20) fixedly mounted inside the supporting member (1); and
an input module (30) connected to the main body (20), the input module (30) having at least one protruded part (31,32,33) exposed to the outside of the supporting member (1),
wherein the main body (20) defines at least one through hole (22) for insertion of the pivot axle (4).

3. The bicycle control device as claimed in claim 1 or 2, wherein the input module (30) comprises at least one press-button (31).

4. The bicycle control device as claimed in claim 3, wherein the input module (30) comprises two press-buttons (31).

5. The bicycle control device as claimed claim 1 or 2, wherein the input module (30) comprises a rotary button (33).

6. A bicycle control device, comprising:
a supporting member (1);
a brake lever (2) movably connected to the supporting member (1);
a pivot axle (4) mounted in the supporting member (1); and
an electrical shift control unit (10), wherein the electrical shift control unit (10) comprises:
a main body (20) pivotally connected to the pivot axle (4) and is drivable by the brake lever (2) to move relative to the supporting member (1); and
an input module (30) connected to the main body (20), the input module (30) having an operating lever (32) extended from the main body (20) along one side of the brake lever (2).

7. The bicycle control device as claimed in claim 6, wherein the input module (30) comprises at least one press-button (31) mounted on the operating lever (32).

8. The bicycle control device as claimed in claim 6, wherein the main body (20) comprises a housing (21), the input module (20) comprises a rotary button (33) rotatably mounted to the housing (21); the operating lever (32) is connected to the rotary button (33) and rotatable relative to the housing (21).

## Patentansprüche

1. Fahrradsteuervorrichtung, umfassend:
Ein Stützelement (1),
einen Bremshebel (2), der beweglich an dem Stützelement (1) angeordnet ist,
eine Drehachse (4), die in dem Stützelement (1) angeordnet ist und als Drehachse des Bremshebels (2) dient, sowie
eine elektrische Schaltsteuereinheit (10),
**dadurch gekennzeichnet, dass** die elektrische Schaltsteuereinheit (10) umfasst:
Einen Hauptkörper (20), der in der Drehachse (4) eingebettet vorliegt, sowie
ein mit dem Hauptkörper (20) verbundenes Eingabemodul (30), wobei das Eingabemodul (30) wenigstens einen vorstehenden Teil (31, 32, 33) aufweist, der auf der Außenseite des Stützelements (1) exponiert angeordnet ist,
worin die Drehachse (4) ein Röhrenelement ist und der wenigstens eine vorstehende Teil (31) des Eingabemoduls (30) von wenigstens einem Ende der Drehachse (4) vorsteht.

2. Fahrradsteuervorrichtung, umfassend:
Ein Stützelement (1),
einen Bremshebel (2), der beweglich an dem Stützelement (1) angeordnet ist,
eine Drehachse (4), die in dem Stützelement (1) angeordnet ist und als Drehachse des Bremshebels (2) dient, sowie
eine elektrische Schaltsteuereinheit (10),
**dadurch gekennzeichnet, dass** die elektrische Schaltsteuereinheit (10) umfasst:
Einen Hauptkörper (20), der fest in dem Stützelement (1) angeordnet ist, sowie ein mit dem Hauptkörper (20) verbundenes Eingabemodul (30), wobei das Eingabemodul (30) wenigstens einen vorstehenden Teil (31, 32, 33) aufweist, der auf der Außenseite des Stützelements (1) exponiert angeordnet ist,
worin der Hauptkörper (20) wenigstens ein Durchgangsloch (22) aufweist, durch dass die Drehachse (4) geführt wird.

3. Fahrradsteuervorrichtung nach Anspruch 1 oder 2, worin das Eingabemodul (30) wenigstens einen Druckknopf (31) umfasst.

4. Fahrradsteuervorrichtung nach Anspruch 3, worin das Eingabemodul (30) wenigstens zwei Druckknöpfe (31) umfasst.

5. Fahrradsteuervorrichtung nach Anspruch 1 oder 2, worin das Eingabemodul (30) einen Drehknopf (33) umfasst.

6. Fahrradsteuervorrichtung, umfassend:
Ein Stützelement (1),
einen Bremshebel (2), der beweglich an dem Stützelement (1) angeordnet ist,
eine Drehachse (4), die in dem Stützelement (1) angeordnet ist, sowie
eine elektrische Schaltsteuereinheit (10), worin die elektrische Schaltsteuereinheit (10) umfasst:
Einen Hauptkörper (20), der drehbar mit der Drehachse (4) verbunden ist und durch den Bremshebel (2) angetrieben werden kann, sich relativ zu dem Stützelement (1) zu bewegen, sowie
ein mit dem Hauptkörper (20) verbundenes Eingabemodul (30), wobei das Eingabemodul (30) einen Bedienhebel (32) umfasst, der sich von dem Hauptkörper (20) entlang einer Seite des Bremshebels (2) erstreckt.

7. Fahrradsteuervorrichtung nach Anspruch 6, worin das Eingabemodul (30) wenigstens einen Druckknopf (31) umfasst, der an dem Bedienhebel (32) angeordnet ist.

8. Fahrradsteuervorrichtung nach Anspruch 6, worin der Hauptkörper (20) ein Gehäuse (21) umfasst, das Eingabemodul (30) einen Drehknopf (33) umfasst, der drehbar an dem Gehäuse (21) befestigt vorliegt, und der Bedienhebel (32) mit dem Drehknopf (33) verbunden ist und relativ zu dem Gehäuse (21) gedreht werden kann.

## Revendications

1. Dispositif de commande de bicyclette, comprenant :
un élément de support (1) ;
un levier de frein (2) relié de manière mobile à l'élément de support (1) ;
un axe de pivot (4) monté dans l'élément de support (1) et travaillé en tant qu'axe de rotation du levier de frein (2) ; et
une unité de commande de changement de vitesse électrique (10),
**caractérisé en ce que** l'unité de commande de changement de vitesse électrique (10) comprend :
un corps principal (20) intégré dans l'axe de pivot (4) ; et
un module d'entrée (30) relié au corps principal (20), le module d'entrée (30) possédant au moins une partie saillante (31, 32, 33) exposée vers l'extérieur de l'élément de support (1) ;
dans lequel l'axe de pivot (4) est un élément tubulaire, et ladite au moins une partie saillante (31) du module d'entrée (30) dépasse d'au moins une extrémité de l'axe de pivot (4).

2. Dispositif de commande de bicyclette, comprenant :
un élément de support (1) ;
un levier de frein (2) relié de manière mobile à l'élément de support (1) ;
un axe de pivot (4) monté dans l'élément de support (1) et travaillé en tant qu'axe de rotation du levier de frein (2) ; et
une unité de commande de changement de vitesse électrique (10),
**caractérisé en ce qu'**une unité de commande de changement de vitesse électrique (10) comprend :
un corps principal (20) monté fixement à l'intérieur de l'élément de support (1) ; et
un module d'entrée (30) relié au corps principal (20), le module d'entrée (30) possédant au moins une partie saillante (31, 32, 33) exposée vers l'extérieur de l'élément de support (1),
dans lequel le corps principal (20) définit au moins un orifice passant (22) pour insertion de l'axe de pivot (4).

3. Dispositif de commande de bicyclette selon la revendication 1 ou 2, dans lequel le module d'entrée (30) comprend au moins un bouton-poussoir (31).

4. Dispositif de commande de bicyclette selon la revendication 3, dans lequel le module d'entrée (30) comprend deux boutons-poussoirs (31).

5. Dispositif de commande de bicyclette selon la revendication 1 ou 2, dans lequel le module d'entrée (30) comprend un bouton rotatif (33).

6. Dispositif de commande de bicyclette, comprenant :
un élément de support (1) ;
un levier de frein (2) relié de manière mobile à l'élément de support (1) ;
un axe de pivot (4) monté dans l'élément de support (1) ; et
une unité de commande de changement de vitesse électrique (10), dans lequel l'unité de commande de changement de vitesse électrique (10) comprend :
un corps principal (20) relié en relation pivotante avec l'axe de pivot (4) et pouvant être entraîné par le levier de frein (2) pour se déplacer par rapport à l'élément de support (1) ; et
un module d'entrée (30) relié au corps principal (20), le module d'entrée (30) comportant un levier de commande (32) en extension à partir du corps principal (20) le long d'un côté du levier de frein (2).

7. Dispositif de commande de bicyclette selon la revendication 6, dans lequel le module d'entrée (30) comprend au moins un bouton-poussoir (31) monté sur le levier de commande (32).

8. Dispositif de commande de bicyclette selon la revendication 6, dans lequel le corps principal (20) comprend un logement (21), le module d'entrée (30) comprend un bouton rotatif (33) monté rotatif sur le logement (21) ; le levier de commande (32) est relié au bouton rotatif (33) et peut tourner par rapport au logement (21).
